# EUROPEAN PATENT APPLICATION

(11) **EP 1 262 662 A1**
(43) Date of publication of application: **04.12.2002**
(21) Application number: 02010939.3
(22) Date of filing: 16.05.2002
(51) Int. Cl.: F04B 27/08, F04B 27/10

(54) **Swash plate type compressor**

(30) Priority: 21.05.2001 JP 2001150406; 16.11.2001 JP 2001351107
(71) Applicant: Kabushiki Kaisha Toyota Jidoshokki, Kariya-shi, Aichi-ken (JP)
(72) Inventor: Ota, Masaki, Kariya-shi, Aichi-ken (JP); Tarutani, Tomoji, Kariya-shi, Aichi-ken (JP); Kurakake, Hirotaka, Kariya-shi, Aichi-ken (JP); Hiramatsu, Osamu, Kariya-shi, Aichi-ken (JP); Narukawa, Kiyoshi, Kariya-shi, Aichi-ken (JP); Inoue, Yoshinori, Kariya-shi, Aichi-ken (JP)
(74) Representative: Leson, Thomas Johannes Alois, Dipl.-Ing.

(57) **Abstract**

A swash plate type compressor including: a plurality of pistons (14) each including a head portion (70) and an engaging portion (72) engaging a radially outer portion of opposite surfaces of the swash plate, each piston being reciprocated by the swash plate, and a plurality of shoes (76,78) each of which is disposed between one of the opposite surfaces of the swash plate and the engaging portion of each piston for sliding on both of the swash plate and each piston; and wherein the swash plate is formed of a ferrous material and has lubricating films (166) formed on sliding surfaces (140,142) thereof which slide on the shoes; and wherein each of at least one of the plurality of shoes is a nitrided shoe which is formed of a ferrous material and which has been subjected to a soft nitriding treatment on at least a sliding surface (138) thereof which slides on the swash plate.

## Description

This application is based on Japanese Patent Application Nos. 2001-150406 filed May 21, 2001, and 2001-351107 filed November 16, 2001, the contents of which are incorporated hereinto by reference.

### BACKGROUND OF THE INVENTION

### Field of the Invention

The present invention relates in general to a swash plate type compressor. In particular, the present invention is concerned with an improvement of a sliding characteristic of a swash plate and pistons in the compressor.

### Discussion of the Related Art

A swash plate type compressor used as a refrigerant compressor in an air conditioning system of an automotive vehicle includes (a) a rotary drive shaft, (b) a swash plate supported by the drive shaft such that the swash plate is inclined or tiltable with respect to a plane perpendicular to an axis of rotation of the drive shaft, (c) a housing which supports the drive shaft such that the drive shaft is rotatable and axially immovable relative to the housing, which has a plurality of cylinder bores which are located at respective circumferential portions radially spaced from the axis of the drive shaft and which extend in a direction parallel to the drive shaft, (d) a plurality of pistons each of which includes a head portion slidably engaging a corresponding one of the cylinder bores and an engaging portion engaging a radially outer portion of opposite surfaces of the swash plate, each piston being reciprocated by the swash plate rotated with the rotary drive shaft, and (e) a plurality of shoes each of which is disposed between one of the opposite surfaces of the swash plate and the engaging portion of each piston, for sliding on both of the swash plate and the piston. Since the swash plate is rotated at a relatively high speed, the compressor is required to exhibit a good sliding characteristic of the shoes and the swash plate. In other words, the compressor needs to exhibit various excellent characteristics such as a high degree of lubrication characteristic for smooth sliding contact of the shoes and the swash plate, high degrees of resistance to wear and resistance to seizure of the shoes and the swash plate.

In general, the swash plate and the shoes used for the swash plate type compressor are formed of respective suitable ferrous materials since the swash plate and the shoes can be economically produced by using the ferrous materials and the swash plate and the shoes formed of the ferrous materials exhibit relatively high degrees of strength, hardness, and wear resistance. For assuring a sufficiently high degree of lubrication characteristic between the swash plate and the shoes formed of the ferrous materials (hereinafter respectively referred to as "ferrous swash plate" and "ferrous shoes"), various techniques are proposed. For instance, the sliding surfaces of the ferrous swash plate, on which the shoes slide, are coated with lubricating films. The lubricating films formed on the sliding surfaces of the ferrous swash plate, however, have a strength lower than those of the ferrous materials which provide respective base bodies of the swash plate and the shoes. Accordingly, local portions of the lubricating films may be separated or removed from the sliding surfaces of the swash plate due to wear, for instance, which is caused by the sliding contact with the shoes over a long period of time. If the local portions of the lubricating films are separated from the sliding surfaces of the swash plate, the ferrous materials of the swash plate and the shoes directly contact with each other, causing seizure therebetween, for instance. The sliding characteristic between the swash plate and the shoes in the compressor is undesirably deteriorated by the seizure.

### SUMMARY OF THE INVENTION

It is therefore an object of the present invention to provide a swash plate type compressor which exhibits a good sliding characteristic of its swash plate and shoes by improving the seizure resistance of the swash plate and the shoes, for instance. The objects may be achieved according to any one of the following modes of the present invention, each of which is numbered like the appended claims and depends from the other mode or modes, where appropriate, to indicate and clarify possible combinations of elements or technical features of the present invention, for easier understanding of the invention. It is to be understood that the present invention is not limited to the technical features or any combinations thereof which will be described for illustrative purpose only. It is to be further understood that a plurality of elements or features included in any one of the following modes of the invention are not necessarily provided all together, and that the invention may be embodied without some of the elements or features described with respect to the same mode.

(1) A swash plate type compressor including;
a rotary drive shaft having an axis of rotation;
a swash plate supported by the rotary drive shaft such
that the swash plate is inclined or tiltable with respect to a plane perpendicular to the axis of rotation of the rotary drive shaft;
a housing which supports the rotary drive shaft such that the rotary drive shaft is rotatable and axially immovable relative to the housing, which has a plurality of cylinder bores which are located at respective circumferential portions radially spaced from the axis of rotation of the rotary drive shaft and which extend in a direction parallel to the rotary drive shaft;
a plurality of pistons each including a head portion slidably engaging a corresponding one of the cylinder bores, and an engaging portion engaging a radially outer portion of opposite surfaces of the swash plate, each piston being reciprocated by the swash plate rotated with the rotary drive shaft; and
a plurality of shoes each of which is disposed between one of the opposite surfaces of the swash plate and the engaging portion of each piston,;
and wherein the swash plate is formed of a ferrous material and has lubricating films formed on sliding surfaces thereof which slide on the plurality of shoes;
and wherein each of at least one of the plurality of shoes is a nitrided shoe which is formed of a ferrous material and which has been subjected to a soft nitriding treatment on at least a sliding surface thereof which slides on the swash plate.

The nitriding treatment permits a hard layer to be formed on the surface of the above-indicated at least one of the plurality of shoes. The hard layer formed by the nitriding treatment exhibits high degrees of wear resistance and corrosion resistance. The nitriding treatment is classified into a gas nitriding treatment in which the nitrogen (N) is diffused in the atmosphere of the NH₃ gas so as to form a nitride, and a soft nitriding treatment including a salt-bath nitriding method which will be described. The gas nitriding treatment is effected mainly on steels for nitriding for a relatively long period of time, whereas the soft nitriding treatment can be effected on various ferrous materials in a relatively short period of time. Accordingly, the soft nitriding treatment is advantageous as the surface treatment of the ferrous shoe. By the soft nitriding treatment, the shoe having high degrees of wear resistance and corrosion resistance can be economically obtained. The soft nitriding treatment permits the desired article to have a relatively high degree of hardness without effecting a quenching treatment. Accordingly, the shoe which has been subjected to the soft nitriding treatment without the quenching treatment does not suffer from a change of its configuration, assuring a high degree of dimensional accuracy.

In the swash plate type compressor according to the mode (1), the swash plate is formed of a ferrous material. The ferrous swash plate is relatively inexpensive. In addition, the ferrous swash plate can be rotated with high stability. In the swash plate type compressor of a variable capacity type which will be described, for instance, the displacement capacity of the compressor is adjusted or changed by changing an angle of the swash plate with respect to a plane perpendicular to the rotation axis of the rotary drive shaft, namely by changing an angle of inclination of the swash plate with respect to the above-indicated plane. (The angle is hereinafter referred to as an "inclination angle" of the swash plate.) While the compressor is operated so as to maintain a predetermined constant displacement capacity, the swash plate is desirably rotated while being kept at a predetermined inclination angle. If the swash plate has a relatively large mass, the inertial force permits the swash plate to be rotated with high stability while being kept at the predetermined inclination angle. Accordingly, the swash plate type compressor equipped with the ferrous swash plate exhibits a high degree of operating stability since the ferrous swash plate can be rotated with high stability.

The lubricating films formed on the sliding surfaces of the swash plate assure good lubrication between the swash plate and the shoes, so that the compressor exhibits a good sliding characteristic. As described above, the strength of the lubricating films is lower than those of the ferrous materials which provide the respective base bodies of the swash plate and the shoes. Accordingly, the lubricating films may be worn in a long time operation of the compressor. Further, the lubricating films may be damaged due to various foreign matters such as those adhering to the components of the compressor in the manufacturing process, those generated by the sliding contact of the components during the operation of the compressor, and those introduced into the compressor from the refrigerant piping. The foreign matters may enter between the sliding surfaces of the swash plate and the shoes, so that the lubricating films may be damaged due to the foreign matters, and accordingly removed from the sliding surfaces of the swash plate. If the lubricating films are locally removed from the sliding surfaces of the swash plate due to the wear and damage described above, the base body of the swash plate directly contacts the base bodies of the shoes at local portions of the swash plate from which the lubricating films have been removed. When both of the shoes and the swash plate are formed of suitable ferrous materials, the seizure may be caused between the swash plate and the shoes. Each of at least one of the plurality of shoes which has been subjected to the soft nitriding treatment, i.e., the nitrided shoe, has a compound layer formed on its surface and principally constituted by the iron nitride, which compound layer exhibits an excellent seizure resistance. In the present swash plate type compressor according to the above mode (1) wherein the swash plate and the nitrided shoe slide on each other, the seizure between the swash plate and the nitrided shoe is not likely to occur even when the lubricating films formed on the sliding surfaces of the swash plate are locally removed therefrom. Accordingly, the present swash plate type compressor exhibits a high degree of resistance to seizure. In other words, the present swash plate type compressor has a good sliding characteristic, and exhibits a good sliding characteristic for a long time service.

The present swash plate type compressor according to the above mode (1) aims at improving the sliding characteristic of the swash plate and the shoes relative to each other. In view of this, the soft nitriding treatment may be effected only on the sliding surface of the shoe, which sliding surface slides on the swash plate. (The sliding surface of the shoe which slides on the swash plate is hereinafter referred to as a "swash-plate-side sliding surface" of the shoe.) Where it is desired to improve the sliding characteristic of the shoe with respect to the corresponding piston, the soft nitriding treatment may also be effected on the sliding surface of the shoe, which sliding surface slides on the piston. (The sliding surface of the shoe which slides on the piston is hereinafter referred to as a "piston-side sliding surface".) Where the soft nitriding treatment is effected only on a part of the surface of the shoe, the other part which need not be subjected to the soft nitriding treatment must be covered, for instance, undesirably making the soft nitriding treatment troublesome. Accordingly, if it is desired to effect the soft nitriding treatment on the shoe in a simplified manner, the soft nitriding treatment may be effected on the entire surface of the shoe. Further, a part of the surface of the shoe, e.g., the swash-plate-side sliding surface of the shoe, may be subjected to a relatively large degree of the soft nitriding treatment so that the hard layer to be formed has a relatively large thickness while the other part may be subjected to a relatively small degree of the soft nitriding treatment so that the hard layer to be formed has a relatively small thickness. In other words, the thickness values of the hard layer including the compound layer formed by the soft nitriding treatment may be changed at different portions of the surface of the shoe. In the present specification, the term "nitrided shoe" refers to a ferrous shoe which has been subjected to the soft nitriding treatment at least on its swash-plate-side sliding surface which slides on the swash plate.

(2) A swash plate type compressor according to the above mode (1), wherein all of the plurality of shoes are the nitrided shoes.

(3) A swash plate type compressor according to the above mode (1), wherein each of said plurality of pistons is a single-headed piston, and the plurality of shoes engaging the engaging portion of the single-headed piston consist of a pair of shoes which are respectively disposed between the opposite surfaces of the swash plate and the engaging portion of the single-headed piston, and wherein at least the shoe which slides on one of the opposite surfaces of the swash plate on the side of the head portion of the single-headed piston is the nitrided shoe.

In the swash plate type compressor equipped with a plurality of pistons, in general, a pair of shoes are respectively disposed between the opposite surfaces of the swash plate and the engaging portion of each piston. The swash plate type compressor is classified into: a swash plate type compressor equipped with double-headed pistons each of which includes two head portions at its opposite ends; and a swash plate type compressor equipped with single-headed pistons each of which includes a single head portion at one of its opposite ends. The head portion of the piston receives a compression reaction force of the refrigerant gas in the axial direction of the piston from cylinder bore toward the head portion of the piston. In the swash plate type compressor equipped with the single-headed pistons, therefore, the pair of shoes respectively receive different magnitudes of the pressing force of the swash plate. Described in detail, one of the pair of shoes, which engages one of the opposite surfaces of the swash plate nearer to the head portion of the piston, receives a larger pressing force from the swash plate than the other shoe which engages the other of the opposite surfaces of the swash plate remote from the head portion of the piston. Accordingly, the above-indicated one shoe which engages the surface of the swash plate nearer to the head portion of the piston slides on the swash plate under a heavier load condition than the other of the pair of shoes which engages the other surface of the swash plate remote from the head portion of the piston. In the swash plate type compressor equipped with the single headed pistons, therefore, the compressor exhibits a considerably improved sliding characteristic if one of the pair of shoes, which engages one of the opposite surfaces of the swash plate nearer to the head portion of the piston, is the nitrided shoe, namely if all of the shoes which engage the above-indicated one surface of the swash plate nearer to the head portion of each piston are the nitrided shoes.

In the swash plate type compressor equipped with the double-headed pistons having two head portions at the opposite ends thereof, the compression reaction force of the refrigerant gas acts on opposite ends of each double-headed piston. Accordingly, the pair of shoes respectively disposed between the opposite surfaces of the swash plate and the engaging portion of each piston is subjected to the pressing force of the swash plate under substantially the same condition. In view of this, if all of the shoes which are installed on the compressor equipped with the double-headed pistons are the nitrided shoes, the compressor exhibits improved sliding characteristic. It is further noted that the sliding characteristic of the compressor equipped with the single-headed pistons is improved if all of the shoes are the nitrided shoes.

Where each of the at least one of the plurality of shoes is the nitrided shoe, the other shoes are non-nitrided shoes which are not subjected to the soft nitriding treatment. The kind of the material of the shoe, the kind of the surface treatment effected on the shoe, etc., are not particularly limited. For instance, the non-nitrided shoes may be ferrous shoes which are subjected to any suitable surface treatment other than the soft nitriding treatment. Further, the non-nitrided shoes may be formed of any other suitable metallic material such as an aluminum alloy.

(4) A swash plate type compressor according to any one of the above modes (1)-(3), wherein the nitrided shoe is formed of a medium-carbon steel or a high-carbon steel.

(5) A swash plate type compressor according to any one of the above modes (1)-(3), wherein the nitrided shoe is formed of a high-carbon chrome bearing steel.

(6) A swash plate type compressor according to any one of the above modes (1)-(3), wherein the nitrided shoe is formed of a stainless steel.

The ferrous material which constitutes the base body of the nitrided shoe is not particularly limited. The soft nitriding treatment is advantageous in that the soft nitriding treatment can be effected on various kinds of materials for the base body of the shoe. Accordingly, various ferrous materials such as alloy steels including a soft steel, a low-carbon steel, a medium-carbon steel, a high-carbon steel, a stainless steel, etc., and a cast iron can be used as the material for the base body of the shoe.

The hardness of the surface of the shoe (hereinafter referred to as "the surface hardness" of the shoe) given by the soft nitriding treatment is increased with an increase in the amount of carbon included in the steel, so that the shoe to be produced exhibits an excellent wear resistance. When the base body of the shoe is formed of the medium-carbon steel or the high-carbon steel such as S45C, S50C, S55C according to the Japanese Industry Standard (JIS) G 4051, the shoe has the surface hardness of not lower than Hv 400 in Vickers hardness, for thereby exhibiting an excellent wear resistance. Since the medium-carbon steel and the high-carbon steel do not include a large amount of expensive alloy elements and relatively inexpensive, the shoe whose base body is formed of those steels is relatively inexpensive.

Since the shoe formed of the high-carbon chrome bearing steel has a high degree of surface hardness exceeding Hv 500 by the soft nitriding treatment, the shoe formed of the high-carbon chrome bearing steel exhibits an excellent wear resistance. Where the shoe is formed of the high-carbon chrome bearing steel, it is desirable that the high-carbon chrome bearing steel SUJ2 according to JIS G 4805 is employed in view of the fact that the shoe is a relatively small component.

The base body of the nitrided shoe may be formed of the stainless steel. By changing the kind and the amount of the alloy elements to be added, individual stainless steels to be obtained exhibit respective different characteristics (such as a good heat resistance and a good corrosion resistance). Accordingly, where the stainless steel is used as the material of the base body of the nitrided shoe, the nitrided shoe has the desired characteristics corresponding to those of the stainless steel.

As described above, the surface hardness of the shoe can be sufficiently increased by the soft nitriding treatment, so that the nitrided shoe need not be subjected to a quenching treatment. Where the shoe is not subjected to the quenching treatment, the shoe has a high degree of dimensional accuracy without suffering from a change of its configuration. The shoe may be subjected to the quenching treatment. Where the shoe is subjected to the quenching treatment, the shoe exhibits high degrees of hardness and wear resistance.

(7) A swash plate type compressor according to any one of the above modes (1)-(6), wherein the soft nitriding treatment is effected according to a salt bath method.

The soft nitriding treatment is not particularly limited, but can be effected according to various known methods such as a salt-bath nitriding method, a gas soft nitriding method, and an ion nitriding method.

Preferably, the salt-bath nitriding method is employed for effecting the soft nitriding treatment on the shoe. The salt-bath nitriding method is generally called as "a tufftride mathod, wherein a substance which is constituted principally by cyanate (such as KCNO, NaCNO) is melted, and an article to be treated is immersed in the molten substance. The soft nitriding treatment can be effected in a relatively short period of time according to the salt-bath nitriding method, permitting economical manufacture of the shoe.

The hard layer formed on the surface of the shoe by the nitriding treatment includes a compound layer functioning as a superficial or outermost layer, and a diffusion layer wherein the nitrogen and the carbon are diffused such that the concentrations of the nitrogen and the carbon decrease in a direction away from the compound layer toward the inner portion of the shoe. The compound layer formed by the salt-bath nitriding method is substantially constituted by Fe₄N which has a considerably high degree of seizure resistance. Further, the compound layer formed by the salt-bath nitriding method has a porous structure. The refrigerant used in the swash plate type compressor contains a lubricating oil for lubricating the components of the compressor. The lubricating oil is present between the swash plate and the shoes. In the nitrided shoe which has been subjected to the soft nitriding treatment according to the salt-bath nitriding method, the porous structure of the compound layer of the nitrided shoe is soaked with the lubricating oil, so that the sliding surface/surfaces of the nitrided shoe has/have a good lubrication characterisitic.

In view of the above advantages, the salt-bath nitriding method is preferably employed for effecting the soft nitriding treatment on the shoe of the present swash plate type compressor.

The salt-bath nitriding method is effected according to a known manner. For instance, the salt-bath method is effected such that the shoe to be treated is immersed in the molten substance principally constituted by the cyanate and accommodated in a vessel while an air is blown into the vessel to keep the concentration of the cyanate at a predetermined constant value. In this case, the shoe is immersed in the molten substance kept at a temperature of 560-570°C for about 0.2-4 hours, for instance.

(8) A swash plate type compressor according to any one of the above modes (1)-(7), wherein the nitrided shoe has a compound layer formed on a surface thereof by the soft nitriding treatment and having a thickness value in a range of not smaller than 5 µm and not larger than 20 µm.

For obtaining substantial effects of the soft nitriding treatment such as an improvement of the seizure resistance, the compound layer formed by the soft nitriding treatment desirably has a thickness value of not smaller than 5 µm. If the compound layer has an excessively large thickness, the adhesion of the compound layer with respect to the base body (in a strict sense, with respect to the diffusion layer) is deteriorated, resulting in a removal of local portions of the compound layer. In addition, if the thickness of the compound layer is excessively large, the surface of the shoe tends to be rough, resulting in an increase of a time required for a polishing operation for surface finishing. Moreover, the formation of the compound layer having an excessively large thickness requires a long time for the nitriding treatment. In view of the above, it is desirable that the thickness of the compound layer is not larger than 20 µm.

(9) A swash plate type compressor according to any one of the above modes (1)-(8), wherein the nitrided shoe is formed by a forging operation, the soft nitriding treatment being effected after the forging operation.

The shoe is preferably formed by a forging operation which permits a quick formation of the shoe. For permitting the shoe to have high degrees of dimensional accuracy and surface smoothness, the cold forging is preferably employed.

The soft nitriding treatment may be effected before or after the forging operation. If the forging operation is effected after the soft nitriding treatment, the compound layer formed on the surface of the shoe by the soft nitriding treatment may be removed therefrom, in particular where the thickness of the compound layer is excessively large or the forging ratio is relatively high. To avoid this, the soft nitriding treatment is preferably effected after the forging operation. The shoe which is subjected to the soft nitriding treatment after it has been forged has a uniform surface condition.

(10) A swash plate type compressor according to any one of the above modes (1)-(9), wherein the swash plate is formed of a spheroidal graphite cast iron.

The ferrous material which provides the base body of the swash plate is not particularly limited. Various ferrous materials such as a soft steel, a high-tensile-strength steel, a stainless steel, and a cast iron. Where the configuration of the swash plate is complicated, the swash plate is preferably formed by casting. In view of this, the cast iron is preferably used as the ferrous material which provides the base body of the swash plate. Where the base body of the swash plate is formed of the cast iron, the carbon precipitated in the matrix of iron is present on the surface of the swash plate, so that the carbon functions as the lubricant when the swash plate slides on the shoes. Among various cast irons, it is preferable to use the spheroidal graphite cast iron according to the above mode (10), in which the precipitated carbon is spheroidized by inoculation. The spheroidal graphite cast iron is generally called as "ductile cast iron" and exhibits high degrees of strength and durability. In particular, the ductile cast iron FCD 700 according to the JIS G 5502 having a considerably high degree of strength is preferably employed.

(11) A swash plate type compressor according to any one of the above modes (1)-(11), wherein the lubricating films comprise a solid lubricant and a synthetic resin as a binder.

In the lubricating films according to the mode (11), the particles of the solid lubricant are dispersed in a matrix of the synthetic resin, for instance. The lubricating films according to the mode (11) can be uniformly and simply formed on the sliding surfaces of the swash plate by a coating method such as spraying or roll coating, resulting in a reduced cost of manufacture of the swash plate. The thickness of the lubricating films is preferably held in a range of not smaller than 3 µm and not larger than 30 µm. The lubricating films effective to reduce the friction between the sliding surfaces of the swash plate and the shoes may be referred to as "friction-reducing films".

(12) A swash plate type compressor according to the above mode (11), wherein the solid lubricant includes at least one of molybdenum disulfide (MoS₂), boron nitride (BN), tungsten disulfide (WS₂), grahite, and polytetrafluoroethylene (PTFE).

The solid lubricants described in the above mode (12) have excellent lubricating properties. The swash plate whose sliding surfaces are covered with the lubricating films including at least one of those solid lubricants has excellent lubricating properties with respect to the shoes. Preferably, the solid lubricant includes at least MoS₂. More preferably, the solid lubricant includes graphite in addition to MoS₂.

(13) A swash plate type compressor according to the above mode (11) or (12), wherein the synthetic resin includes at least one of polyamidimide, epoxy resin, polyether ketone, and phenol resin.

On the at least sliding surfaces of the swash plate, metal coating films such as metal sprayed films described in the following mode (14) may be formed. The lubricating films described above are formed on the metal coating films. If at least one of the synthetic resins described in the above mode (13) is used for forming the lubricating films, the lubricating films to be formed on the metal coating films have good adhesion properties with respect to the metal coating films, and exhibit good heat resistance. Accordingly, the lubricating films which comprise the solid lubricant and at least one synthetic resin selected from among those described above maintain good lubricating properties for a relatively long period of time and exhibit a high degree of durability.

(14) A swash plate type compressor according to any one of the above modes (1)-(13), wherein the swash plate includes, on at least the sliding surfaces thereof which slide on the shoes, metal sprayed films formed of a material selected from the group consisting of aluminum, copper, an aluminum alloy, and a copper alloy, the lubricating films being formed on the metal sprayed films.

As described above, the strength of the lubricating films is lower than those of the ferrous materials which provides the respective base bodies of the swash plate and the shoes. If the lubricating films are locally removed from the swash plate due to the wear, for instance, the base body of the swash plate slides directly on the base bodies of the shoes at local portions of the swash plate from which the lubricating films have been removed. In this case, the sliding characteristic of the swash plate with respect to the shoes is deteriorated at the local portions of the swash plate from which the lubricating films have been removed. The swash plate in which the metal sprayed films are formed between its base body and the lubricating films maintains a good sliding characteristic owing to the metal sprayed films, even when the lubricating films are removed from the swash plate. Since the swash plate and the shoes are formed of the ferrous materials, the seizure may be caused between the swash plate and the shoes if the lubricating films are removed from the swash plate. The metal sprayed films are effective to prevent or minimize the seizure between the swash plate and the shoes, so that the swash plate type compressor according to the above mode (14) exhibits a high degree of seizure resistance owing to the seizure-preventing effect given by not only the nitrided shoe but also the metal sprayed films. The metal sprayed films are preferably aluminum sprayed films since the aluminum sprayed films are relatively inexpensive. The metal sprayed films desirably have a film thickness of 10-200 µm.

(15) A swash plate type compressor according to any one of the above modes (1)-(14), wherein the swash plate is subjected to a quenching treatment on at least the sliding surfaces thereof which slide on said shoes.

If the surface strength of the base body of the swash plate is increased, the wear of the sliding surfaces of the swash plate on which the shoes slide can be reduced, for thereby improving the durability of the swash plate. The swash plate type compressor according to the mode (15) having the ferrous swash plate which is subjected to the quenching treatment on at least its sliding surface exhibits a high degree of durability. While the quenching treatment can be effected according to any known method, it is desirable to employ an induction hardening, which permits uniform hardening of the sliding surfaces. It is preferable that the swash plate which has been subjected to the quenching treatment has a surface hardness of not lower than H_{R}C 40 in Rockwell hardness.

The swash plate may be arranged such that the metal sprayed films are formed on the sliding surfaces which have been subjected to the quenching treatment. Although the thus arranged swash plate assures considerably high degrees of sliding characteristic and durability, the manufacturing cost of the swash plate is inevitably increased. In the present swash plate type compressor, the sliding surfaces of the swash plate on which each of the nitrided shoes slides are protected from seizing on the base body of the shoe even when the lubricating films are removed therefrom, owing to the hard layer formed by the nitriding treatment on the swash-plate-side sliding surface of the nitrided shoe. In view of this, the compressor having the swash plate in which the lubricating films are directly formed on the quenched sliding surfaces without including the metal sprayed films therebetween can exhibit an excellent sliding characteristic. Accordingly, the swash plate type compressor having the thus formed swash plate can be produced at a relatively low cost and is suitable for a practical use.

(16) A swash plate type compressor according to any one of the above modes (1)-(15), farther including a swash plate inclination angle changing device for changing an inclination angle of the swash plate.

In the swash plate type compressor of a variable capacity type, the displacement capacity of the compressor is generally adjusted by changing the inclination angle of the swash plate with respect to the plane perpendicular to the rotation axis of the drive shaft, for thereby changing the reciprocating stroke of the pistons. In the thus arranged swash plate type compressor of variable capacity type, when the swash plate is inclined with respect to the above-indicated plane, the shoes have an elliptical path on the swash plate. With an increase in the inclination angle of the swash plate, the major axis of an ellipse of the path is increased. Since the swash plate type compressor needs to be compact, the size, i.e., the diameter of the swash plate is made small to such an extent that the swash plate does not interfere with the pistons when the swash plate is not inclined. In other words, the diameter of the swash plate is determined so as to permit the shoes to engage the swash plate such that the end of the shoe on the radially outer side of the swash plate is flush with the outer circumferential surface of the swash plate, in other words, to prevent the shoe from radially outwardly protruding from the radially outer portion of the swash plate, when the swash plate is not inclined. In the compressor having the thus designed swash plate, when the swash plate is inclined at a relatively large angle, the shoes engaging the pistons which are located near the opposite ends of the major axis of the elliptical path of the shoes, namely, the shoes engaging the pistons located near the compression stroke end and the suction stroke end, respectively, slide on the swash plate such that portions of the shoes radially outwardly protrude from the radially outer portion of the swash plate, depending upon the structure of the compressor. In this case, the area of contact or engagement of the swash plate and the shoes is undesirably reduced, so that a relatively large pressing force of the shoes acts on the swash plate at its small surface area contacting the shoes. The shoes may slide on the swash plate while the shoes are inclined. In this case, the pressing force of the shoes acts on portions of the swash plate in the vicinity of its circumferential edges having an extremely small surface area.

Since the strength of the lubricating films formed on the sliding surfaces of the swash plate is relatively small, the lubricating films are likely to be worn when the shoes slide on a small surface area of the swash plate as described above. In the swash plate type compressor wherein the inclination angle of the swash plate is changed, the shoes and the swash plate slide on each other under a very severe or heavy load conditions, so that the lubricating films tend to be easily worn. In the present swash plate type compressor wherein at least one of the plurality of shoes is the nitrided shoe, the sliding surfaces of the swash plate and the shoes are protected from the seizure even when the lubricating films formed on the sliding surfaces of the swash plate are worn. Therefore, the present swash plate type compressor maintains a good sliding characteristic. Thus, the principle of the present invention is particularly advantageously applicable to the swash plate type compressor of variable capacity type in which the inclination angle of the swash plate is changed to change the displacement capacity of the compressor.

### BRIEF DESCRIPTION OF THE DRAWINGS

The above and optional objects, features, advantages and technical and industrial significance of the present invention will be better understood and appreciated by reading the following detailed description of a presently preferred embodiment of the invention, when considered in connection with the accompanying drawings, in which:
Fig. 1 is a front elevational view in cross section of a swash plate type compressor of variable capacity type equipped with single-headed pistons; and
Fig. 2 is an enlarged front elevational view in cross section showing a shoe and a portion of the swash plate, which engage each other.

### DETAILED DESCRIPTION OF THE PREFERRED EMBODIMENT

Referring to the accompanying drawings, there will be described a presently preferred embodiment of this invention as applied to a swash plate type compressor used for an air conditioning system of an automotive vehicle, in particular, a swash plate type compressor of variable capacity type equipped with single-headed pistons.

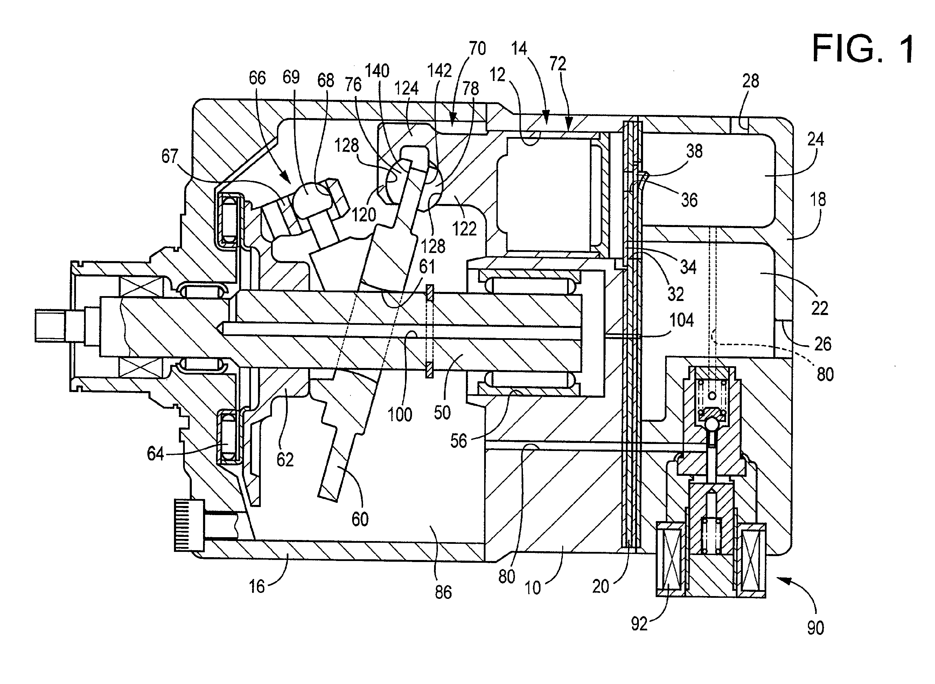

Referring first to Fig. 1, there is shown a compressor of swash plate type. In Fig. 1, reference numeral 10 denotes a cylinder block having a plurality of cylinder bores 12 formed so as to extend in its axial direction such that the cylinder bores 12 are arranged along a circle whose center lies on a centerline of the cylinder block 10. Single-headed pistons generally indicated at 14 (hereinafter simply referred to as "piston 14") are reciprocably received in the respective cylinder bores 12. To one of the axially opposite end faces of the cylinder block 10, (the left end face as seen in Fig. 1, which will be referred to as "front end face"), there is attached a front housing 16. To the other end face (the right end face as seen in Fig. 1, which will be referred to as "rear end face"), there is attached a rear housing 18 through a valve plate 20. The front housing 16, rear housing 18 and cylinder block 10 cooperate to constitute a housing assembly of the swash plate type compressor. The rear housing 18 and the valve plate 20 cooperate to define a suction chamber 22 and a discharge chamber 24, which are connected to a refrigerating circuit (not shown) through an inlet 26 and an outlet 28, respectively. The valve plate 20 has suction ports 32, suction valves 34, discharge ports 36 and discharge valves 38.

A rotary drive shaft 50 is disposed in the cylinder block 10 and the front housing 16 such that the axis of rotation of the drive shaft 50 is aligned with the centerline of the cylinder block 10. The drive shaft 50 is supported at its opposite end portions by the front housing 16 and the cylinder block 10, respectively, via respective bearings, such that the drive shaft 50 is rotatable and axially immovable relative to the front housing 16 and the cylinder block 10. The cylinder block 10 has a central bearing hole 56 formed in a central portion thereof, and the bearing is disposed in this central bearing hole 56, for supporting the drive shaft 50 at its rear end portion. The front end portion of the drive shaft 50 is connected, through a clutch mechanism such as an electromagnetic clutch, to an external drive source (not shown) in the form of an engine of an automotive vehicle. In operation of the compressor, the drive shaft 50 is connected through the clutch mechanism to the vehicle engine in operation so that the drive shaft 50 is rotated about its axis. The drive shaft 50 and the cylinder bores 12 are positioned relative to each other such that the cylinder bores 12 are located at respective circumferential portions of the housing which are radially spaced from the axis of rotation of the drive shaft 50, and such that the cylinder bores 12 extend in a direction parallel to the drive shaft 50.

The rotary drive shaft 50 carries a swash plate 60 such that the swash plate 60 is axially movable and tiltable relative to the drive shaft 50. The swash plate 60 has a central hole 61 through which the drive shaft 50 extends. The inner dimension of the central hole 61 as measured in a vertical direction of Fig. 1 gradually increases in a direction from the axially intermediate portion toward each of the axially opposite ends, and the transverse cross sectional shape of the central hole 61 at each of the axially opposite ends is elongated. To the drive shaft 50, there is fixed a rotary member 62 as a torque transmitting member, which is held in engagement with the front housing 16 through a thrust bearing 64. The swash plate 60 is rotated with the drive shaft 50 by a hinge mechanism 66 during rotation of the drive shaft 50. The hinge mechanism 66 guides the swash plate 60 for its axial and tilting motions. The hinge mechanism 66 includes a pair of support arms 67 fixed to the rotary member 62, guide pins 69 which are formed on the swash plate 60 and which slidably engage guide holes 68 formed in the support arms 67, the central hole 61 of the swash plate 60, and the outer circumferential surface of the drive shaft 50.

The piston 14 indicated above includes an engaging portion 70 engaging the radially outer portion of the opposite surfaces of the swash plate 60, and a head portion 72 formed integrally with the engaging portion 70 and slidably fitted in the corresponding cylinder bore 12. The head portion 72 of the piston 14 in the present embodiment is made hollow, for thereby reducing the weight of the piston 14. The head portion 72, cylinder bore 12, and valve plate 20 cooperate with one another to define a pressurizing chamber. The engaging portion 70 engages the radially outer portion of the opposite surfaces of the swash plate 60 through a pair of part-spherical-crown shoes 76, 78. The shoes 76, 78 will be described in greater detail. The piston 14 in the present embodiment has a single head portion 72 at one of its opposite ends, and is referred to as the single-headed piston.

The piston 14 is reciprocated by rotation of the swash plate 60. Described in detail, a rotary motion of the swash plate 60 is converted into a reciprocating linear motion of the piston 14 through the shoes 76. (Where it is not necessary to distinguish the pair of shoes 76, 78 from each other, the shoe is referred to simply as "the shoe 76".) A refrigerant gas in the suction chamber 22 is sucked into the pressurizing chamber of the cylinder bore 12 through the suction port 32 and the suction valve 34, when the piston 14 is moved from its upper dead point to its lower dead point, that is, when the piston 14 is in the suction stroke. The refrigerant gas in the pressurizing chamber of the cylinder bore 12 is pressurized by the piston 14 when the piston 14 is moved from its lower dead point to its upper dead point, that is, when the piston 14 is in the compression stroke. The pressurized refrigerant gas in the pressurizing chamber is discharged into the discharge chamber 24 through the discharge port 36 and the discharge valve 38. A reaction force acts on the piston 14 in the axial direction as a result of compression of the refrigerant gas in the pressurizing chamber. This compression reaction force is received by the front housing 16 through the piston 14, swash plate 60, rotary member 62 and thrust bearing 64.

The cylinder block 10 has an intake passage 80 formed therethrough for communication between the discharge chamber 24 and a crank chamber 86 which is defined between the front housing 16 and the cylinder block 10. The intake passage 80 is connected to a solenoid-operated control valve 90 provided to control the pressure in the crank chamber 86. The solenoid-operated control valve 90 includes a solenoid coil 92. The amount of electric current applied to the solenoid coil 92 is controlled depending upon the air conditioner load by a control device not shown constituted principally by a computer.

The rotary drive shaft 50 has a bleeding passage 100 formed therethrough. The bleeding passage 100 is open at one of its opposite ends to the central bearing hole 56, and is open at the other end to the crank chamber 86. The central bearing hole 56 communicates at its bottom with the suction chamber 22 through a communication port 104.

The present swash plate type compressor is of variable capacity type. By controlling the pressure in the crank chamber 86 by utilizing a difference between the pressure in the discharge chamber 24 as a high-pressure source and the pressure in the suction chamber 22 as a low pressure source, a difference between the pressure in the pressurizing chamber of the cylinder bore 12 and the pressure in the crank chamber 86 is regulated to change the angle of inclination of the swash plate 60 with respect to a plane perpendicular to the axis of rotation of the drive shaft 50, for thereby changing the reciprocating stroke (suction and compression strokes) of the piston 14, whereby the displacement capacity of the compressor can be adjusted. Described in detail, by energization and de-energization of the solenoid coil 92 of the solenoid-operated control valve 90, the crank chamber 86 is selectively connected to and disconnected from the discharge chamber 24, so that the pressure in the crank chamber 86 is controlled. The swash plate inclination angle changing device for changing the inclination angle of the swash plate in the present embodiment is constituted by the hinge mechanism 66, cylinder bores 12, pistons 14, suction chamber 22, discharge chamber 24, central bearing hole 56, crank chamber 86, bleeding passage 100, communication port 104, control device not shown, etc.

The cylinder block 10 and each piston 14 are formed of an aluminum alloy. The piston 14 is coated at its outer circumferential surface with a fluoro resin film which prevents a direct contact of the aluminum alloy of the piston 14 with the aluminum alloy of the cylinder block 10 so as to prevent seizure therebetween, and makes it possible to minimize the amount of clearance between the piston 14 and the cylinder bore 12. Other materials may be used for the cylinder block 10, the piston 14, and the coating film.

The end portion of the engaging portion 70 of the piston 14, which is remote from the head portion 72, has a U-shape in cross section. Described in detail, the engaging portion 70 has a base section 124 which defines the bottom of the U-shape, and a pair of substantially parallel arm sections 120, 122 which extend from the base section 124 in a direction perpendicular to the axis of the piston 14. The two opposed lateral walls of the U-shape of the engaging portion 70 have respective recesses 128 which are opposed to each other. Each of these recesses 128 is defined by a part-spherical inner surface of the lateral wall. The part-spherical inner surfaces of the recesses 128 are located on the same spherical surface.

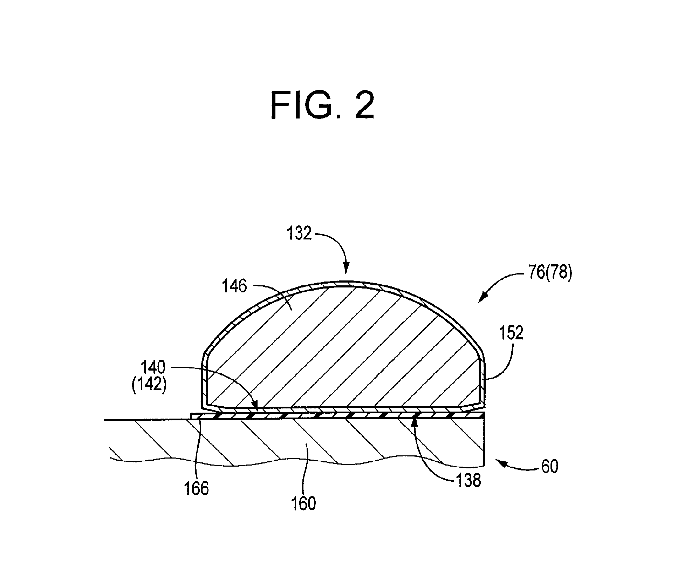

As shown in Fig. 2, each of the pair of shoes 76 has a substantially part-spherical crown shape, and includes a generally convex part-spherical sliding surface 132 which slides on the piston 14 (hereinafter referred to as "piston-side sliding surface 132"), and a generally flat sliding surface 138 which slides on the swash plate 60 (hereinafter referred to as "swash-plate-side sliding surface 138"). Strictly speaking, the swash-plate-side sliding surface 138 is a slightly convex curved surface (e.g., a convex part-spherical surface having a considerably large radius of curvature), and includes a tapered portion formed at a radially outer portion thereof. The piston-side sliding surface 132 has a cylindrical portion formed adjacent to the swash-plate-side sliding surface 138. The boundary between the convex curved surface and the tapered portion, the boundary between the tapered portion and the cylindrical portion, and the boundary between the cylindrical portion and the part-spherical convex surface, are rounded so as to have respective different small radii of curvature. The pair of shoes 76 slidably engage the part-spherical inner surfaces of the recesses 128 of the piston 14 at their piston-side sliding surface 138 and slidably engage the radially outer portion of the opposite surfaces of the swash plate 60, i.e., the sliding surfaces 140, 142 of the swash plate 60, at their swash-plate-side sliding surface 138. (Where it is not necessary to distinguish one of the sliding surfaces 140, 142 from each other, the sliding surface is referred to simply as "sliding surface 140".) The pair of shoes 76 are designed such that their convex part-spherical surfaces of the piston-side sliding surfaces 132 are located on the same spherical surface. In other words, each shoe 76 has a part-spherical crown shape whose size is smaller than a hemi-sphere by an amount corresponding to a half of the thickness of the swash plate 60. The shape of the shoe is not limited to that described above. For instance, the shoe used for a compressor of fixed capacity type desirably has a size slightly larger than the hemi-sphere for preventing a reduction in the sliding surface area even when the flat portion of the shoe is worn.

The shoe 76 is a nitrided shoe which has been subjected to the soft nitriding treatment. In the present embodiment, the base body 146 of the shoe 76 is formed of a ferrous material, e.g., a high-carbon chrome bearing steel (SUJ2 according to the JIS G 4805), and the entire surface of the shoe 76 including the swash-plate-side sliding surface 138 is covered with a hard layer formed by the soft nitriding treatment according to the salt-bath nitriding method. Namely, the superficial surface portion of the base body 146 of the shoe 76 is changed into the hard layer by the soft nitriding treatment. As described above, the hard layer formed by the soft nitriding treatment includes the compound layer and the diffusion layer. In Fig. 2, only the compound layer (indicated at 152) is shown, and the base body 146 of the shoe 76 does not include the hard layer. The thickness of the compound layer 152 in Fig. 2 is exaggerated for easier understanding. In general, the compound layer 152 has a thickness of 3-30 µm. The material of the base body 146 of the shoe 76 is not limited to the above-described SUJ2. Further, the soft nitriding treatment and the thickness of the compound layer are not limited to those described above.

There will be next explained a method of producing the shoe 76. The base body 146 of the shoe 76 is produced by a closed-die forging operation in a cold condition effected on a cylindrical or spherical blank cut from a wire rod. The thus obtained base body 146 is then subjected to surface polishing and barrel polishing for adjusting the size of the base body 146 and smoothing the surface of the base body 146. Thereafter, the base body 146 is subjected to the soft nitriding treatment according to the salt-bath nitriding method under predetermined conditions, for thereby providing the shoe 76. The obtained shoe 76 is subjected to a surface finishing operation including the surface polishing, barrel polishing, and buff polishing. The method of producing the shoe 76 is not limited to that described above.

The base body 160 of the swash plate 60 is formed of a ferrous material, e.g., a spheroidal graphite cast iron, generally called as ductile cast iron such as FCD 700 according to the JIS G 5502. On the sliding surfaces 140 located at a radially outer portion of the opposite surfaces of the swash plate 60, there are formed lubricating films 166. Each lubricating film 166 comprises MoS₂ and graphite as the solid lubricant, and a synthetic resin in the form of polyamidimide, as a binder. In Fig. 2, the thickness of the lubricating film 166 is exaggerated for easier understanding. In general, the lubricating film 166 has a thickness value of 3-30 µm. The base body 160 of the swash plate 60 is subjected to a quenching treatment at its portions corresponding to the sliding surfaces **140.** The base body **160** has the surface hardness of not smaller than H_{R}C **40** by the quenching treatment. The structure of the swash plate type compressor is not limited to that as described above. For instance, the kind of the ferrous material of the base body 160 of the swash plate 60 and the thickness value of the lubricating film 166 are not limited to those described above. The quenching treatment may or may not be effected on the portions of the base body 160 corresponding to the sliding surfaces 140. While the metal sprayed films are not provided in the present embodiment, each of the metal sprayed films may be provided between the base body 160 of the swash plate 60 and each lubricating film 166.

The swash plate 60 is produced in a following manner. Initially, the base body 160 is formed by casting. The base body 160 is subjected to a machining operation on predetermined portions thereof including the radially outer portion of its opposite surfaces corresponding to the sliding surfaces 140. Subsequently, the sliding surfaces 140 are subjected to the induction hardening. The base body 160 is then subjected to the surface polishing for adjusting the size of the sliding surfaces 140 and smoothing the surface of the base body 160. Thereafter, a mixture of the solid lubricant and the synthetic resin is coated on the sliding surfaces 140 by a spraying method or a roll coating method. The mixture in the form of paste is cured so as to provide the lubricating films 166. Thus, the swash plate 60 is produced. The method of producing the swash plate 60 is not limited to that described above.

As described above, the strength of the lubricating films 166 formed on the sliding surfaces 140 of the swash plate 60 is lower than those of the base body 146 of the shoes 76 and the base body 160 of the swash plate 60. Accordingly, the lubricating films 166 may be worn due to the sliding contact with the shoes 76 after a long time operation of the compressor. If the foreign matters enter between the sliding surfaces 140 of the swash plate 60 and the swash-plate-side sliding surfaces 138 of the shoes 76, the foreign matters may damage the lubricating films 166, resulting in the wear of the lubricating films 166. In the present swash plate type compressor wherein the swash-plate-side sliding surfaces 138 of the shoes 76 have been subjected to the soft nitriding treatment, the shoes 76 and the swash plate 60 are prevented from seizing on each other even when the lubricating films 166 are locally worn. Accordingly, the swash plate type compressor according to the present embodiment has a good sliding characteristic, and exhibits a good sliding characteristic for a long period of service.

The present swash plate type compressor is equipped with a plurality of single-headed pistons 14. The head portion 72 of each single-headed piston 14 receives a compression reaction force of the refrigerant gas in the axial direction of the piston from the cylinder bore 12 toward the head portion 72. Therefore, one of the pair of shoes (i.e., the shoe 78 in Fig. 1), which engages one of the opposite surfaces of the swash plate 60 nearer to the head portion 72 of the piston 14, receives a larger pressing force from the swash plate 60 than the other shoe (i.e., the shoe 76 in Fig. 1) which engages the other of the opposite surfaces of the swash plate 60 remote from the head portion 72 of the piston 14. Accordingly, the sliding surface 142 of the swash plate 60 on which the shoe 78 slides is placed under severer sliding conditions during operation of the compressor than the sliding surface 140 on which the shoe 76 slides. The severe sliding conditions undesirably increase the wear of the lubricating films 166. In the present swash plate type compressor, therefore, the lubricating film 166 formed on the sliding surface 142 of the swash plate 60 nearer to the head portion 72 of the piston 14 suffers from a high rate of wearing than that formed on the sliding surface 140 remote from the head potion 72 of the piston 14. In the present swash plate type compressor, both of the shoes 76, 78 are the nitrided shoes which have been subjected to the soft nitriding treatment. Only the shoe 78 may be the nitrided shoe, which shoe 78 slides on the sliding surface 142 of the swash plate 60 having the lubricating film 166 which suffers from a high rate of wearing. Namely, in the swash plate type compressor equipped with the single-headed pistons, only the shoes which engage one of the opposite surfaces of the swash plate nearer to the head portion of each piston are the nitrided shoes. This arrangement reduces the cost of manufacture of the compressor.

The present swash plate type compressor is of variable capacity type, and includes the swash plate angle changing device for changing the inclination angle of the swash plate 60. When the swash plate 60 is inclined with respect to the plane perpendicular to the rotation axis of the drive shaft 50, the shoes have an elliptical path on the swash plate. With an increase in the inclination angle of the swash plate 60, the major axis of an ellipse of the path is increased. Since the swash plate type compressor needs to be compact, the diameter of the swash plate 60 is made small to such an extent that the swash plate does not interfere with the engaging portions 70 of the pistons 14 when the swash plate 60 is not inclined. Accordingly, when the swash plate 60 is inclined at a relatively large angle, the shoes 76 engaging the pistons which are located near the compression stroke end and the suction stroke end, respectively, slide on the swash plate 60 such that portions of the shoes 76 radially outwardly protrude from the radially outer portion of the swash plate 60. For instance, the piston 14 shown in Fig. 1 is at its compression stroke end, and the shoes 76, 78 engaging that piston 14 partly protrude from the radially outer portion of the swash plate 60. (Fig. 2 shows the shoe which does not protrude from the radially outer portion of the swash plate.) When the shoes partly protrude from the radially outer portion of the swash plate 60 shown in Fig. 1, the area of contact or engagement of the swash plate and the shoes is undesirably reduced, so that a relatively large pressing force of the shoes acts on the swash plate at its small surface area contacting the shoes. The shoes may slide on the swash plate while the shoes are inclined. In this case, the pressing force of the shoes acts on portions of the swash plate in the vicinity of its circumferential edges having an extremely small surface area. Thus, the swash plate type compressor of variable capacity type wherein the inclination angle of the swash plate is changed is operated under a heavy load condition than the swash plate type compressor of fixed capacity type. In the swash plate type compressor of variable capacity type, therefore, the lubricating films formed on the sliding surfaces of the swash plate tends to be easily worn, so that the seizure of the shoes and the swash plate is likely to occur. In view of this, the swash plate type compressor according to the present invention equipped with the nitrided shoes is suitable as the swash plate type compressor of variable capacity type wherein the inclination angle of the swash plate is changed.

While the presently preferred embodiment of this invention has been described above, for illustrative purpose only, it is to be understood that the present invention is not limited to the details of the illustrated embodiment. For example, the principle of the invention is applicable to a swash plate type compressor equipped with double-headed pistons each having head portions on the opposite sides of the engaging portion, or a swash plate type compressor of fixed capacity type. It is to be understood that the present invention may be embodied with various changes and improvements such as those described in the SUMMARY OF THE INVENTION, which may occur to those skilled in the art.

### <Experiments for confirming the properties of the swash plate type compressor>

The following experiments were conducted for examining the properties such as the seizure resistance of the swash plate type compressor described in the DETAILED DESCRIPTION OF THE PREFERRED EMBODIMENT. In the compressor used in the experiments, a portion of the lubricating film formed on the sliding surface of the swash plate nearer to the head portion of the piston was removed by positive wearing. In this state, the compressor was operated under various conditions described below. The surface area of the portion of the sliding surface from which the lubricating film was removed is about one-fifth of the area of the swash-plate-side sliding surface of the shoe.

### <Experiment 1>

The swash plate type compressor was operated at a discharge pressure value in the vicinity of a maximum value expected when installed on an automotive vehicle. The compressor was inspected for the wear of the lubricating films and the seizure of the swash-plate-side sliding surfaces of the shoes and the sliding surfaces of the swash plate. The experiment was conducted under the following three different operating conditions (#11, #12, and #13) of the compressor. In the operating condition #11, the discharge pressure Pd was 3 MPa and the rotating speed Nc of the swash plate was 700 rpm. In the operating condition #12, the discharge pressure Pd was 2 MPa and the rotating speed Nc of the swash plate was 4000 rpm. In the operating condition #13, the discharge pressure Pd was 2.5 MPa and the rotating speed Nc of the swash plate was 4000 rpm. The compressor was operated for two hours under any of these three operating conditions. The following TABLE 1 shows the results together with the operating conditions.

**TABLE 1**

| No. | Nc (rpm) | Pd (MPa) | operating time (Hr) | results |
|---|---|---|---|---|
| #11 | 700 | 3 | 2 | no increase of wear of lubricating films·no seizure |
| #12 | 4000 | 2 | 2 | no increase of wear of lubricating films·no seizure |
| #13 | 4000 | 2.5 | 2 | no increase of wear of lubricating films·no seizure |

· As is apparent from the results indicated in the TABLE 1, no increase in the amount of wear of the lubricating films and no seizure between the shoes and the swash plate were observed under any of those three different operating conditions of the compressor. It was therefore confirmed that the present compressor exhibits a high degree of seizure resistance and a good sliding characteristic while it is operated at the maximum discharge pressure value where the shoes and the swash plate are held in sliding contact with each other with a relatively large pressing force acting therebetween.

### <Experiment 2>

The swash plate type compressor was operated with the swash plate being rotated at relatively high speeds described below. The compressor was inspected for the wear of the lubricating films and the seizure between the swash-plate-side sliding surfaces of the shoes and the sliding surfaces of the swash plate. The experiment was conducted under the following four different operating conditions (#21, #22, #23, and #24) of the compressor. In the operating condition #21 through #24, the discharge pressure Pd was 1.5 MPa, and the swash plate was rotated at respective different speeds Nc, namely, 5000 rpm, 6500 rpm, 7000 rpm, and 8000 rpm. In the operating conditions #21 and #23, the compressor was operated for 2 hours, while the compressor was operated for 24 hours in the operating conditions #22 and #24. The following TABLE 2 shows the results together with the operating conditions.

**TABLE 2**

| No. | Nc (rpm) | Pd (MPa) | operating time (Hr) | results |
|---|---|---|---|---|
| #21 | 5000 | 1.5 | 2 | no increase of wear of lubricating films·no seizure |
| #22 | 6500 | 1.5 | 24 | no increase of wear of lubricating films·no seizure |
| #23 | 7000 | 1.5 | 2 | no increase of wear of lubricating films·no seizure |
| #24 | 8000 | 1.5 | 24 | no increase of wear of lubricating films·no seizure |

As is apparent from the results indicated in the TABLE 2, no increase in the amount of wear of the lubricating films and no seizure between the shoes and the swash plate were observed under any of those four different operating conditions of the compressor. It was therefore confirmed that the present compressor exhibits a high degree of seizure resistance and a good sliding characteristic even when it is operated with the swash plate being rotated at relatively high speeds.

### <Experiment 3>

When the swash plate type compressor is turned off, the temperature of the compressor is lowered, and the refrigerant gas is liquefied and stored in the cylinder bores. When the compressor is subsequently re-started, the refrigerant in the liquid form is compressed in the cylinder bores. This operating condition of the compressor is referred to as "liquid compression state". In this liquid compression state of the compressor, a considerably large compression reaction force of the liquid-form refrigerant is caused, so that the shoes and the swash plate are subjected to a relatively large pressing force acting on each other. In the refrigerant gas, the lubricating oil is included in the form of mist. Under the normal operation of the compressor, the mist-form lubricating oil is present between the swash plate and the shoes for assuring good lubrication therebetween. When the compressor is turned off, a mist of the refrigerant gas changes into dew drops in the crank chamber, and the lubricating oil present between the swash pate and the shoes is washed away by the dew drops. If the compressor is re-started in this state, the swash plate and the shoes slide on each other without the lubricating oil being present therebetween for a while after the re-start of the compressor. Accordingly, the swash plate and the shoes are subjected to extremely severe sliding conditions while the compressor is operated in the above-described liquid compression state which is caused upon re-starting of the compressor after the interruption (intermission) of the compressor.

In the following experiment, the swash plate type compressor was alternately and intermittently turned on and off. Each time the compressor was re-started, the compressor was in the liquid-compression state. The experiment was conducted under the following three different operating conditions (#31, #32, and #33) in which the swash plate was rotated at respective different speeds Nc. In the operating conditions #31 through #33, the rotating speeds Nc of the swash plate were 4500 rpm, 5500 rpm, and 6500 rpm, respectively. In the operating condition #31, the compressor was operated such that the compressor was subjected to the liquid compression state twenty-five times. In the operating conditions #32, and #33, the compressor was operated such that the compressor was subjected to the liquid compression state five times. The following TABLE 3 shows the results of the experiment together with the operating conditions.

**TABLE 3**

| No. | Nc (rpm) | liquid compression state (times) | results |
|---|---|---|---|
| #31 | 4500 | 25 | no increase of wear of lubricating films·no seizure |
| #32 | 5500 | 5 | no increase of wear of lubricating films·no seizure |
| #33 | 6500 | 5 | no increase of wear of lubricating films·no seizure |

As is apparent from the results of the TABLE 3, no increase in the amount of wear of the lubricating films and no seizure between the swash plate and the shoes were observed under any of those three different operating conditions of the compressor. It was therefore confirmed that the present swash plate type compressor exhibits a high degree of seizure resistance and a good sliding characteristic even when the compressor is operated under the extremely severe condition, i.e., in the liquid compression state.

### <Experiment 4>

A durability test was conducted in the following manner under predetermined conditions to inspect an influence of the nitrided shoes on the lubricating films of the swash plate. A clearance between each shoe and the swash plate was measured before and after the test. A difference between the clearance values before and after the test was obtained as an amount of wear of the lubricating films. The amount of wear of the lubricating films in the swash plate type compressor equipped with the nitrided shoes was substantially equal to that in the compressor equipped with the non-nitrided shoes. It was therefore confirmed that the lubricating films are not considerably worn due to the sliding contact with the nitrided shoes. It was also confirmed in the durability test that the nitrided shoes have a sufficiently high degree of durability without suffering from removal of the compound layers formed on the surfaces thereof by the nitriding treatment.

A swash plate type compressor including; a rotary drive shaft (50) having an axis of rotation; a swash plate (60) supported by the drive shaft such that the swash plate is inclined or tiltable with respect to a plane perpendicular to the axis of rotation of the shaft; a housing (10, 16, 18) which supports the drive shaft such that the drive shaft is rotatable and axially immovable relative to the housing, which has a plurality of cylinder bores (12) which are located at respective circumferential portions radially spaced from the axis of rotation of the drive shaft and which extend in a direction parallel to the drive shaft; a plurality of pistons (14) each including a head portion (70) slidably engaging a corresponding one of the cylinder bores, and an engaging portion (72) engaging a radially outer portion of opposite surfaces of the swash plate, each piston being reciprocated by the swash plate rotated with the drive shaft; and a plurality of shoes (76, 78) each of which is disposed between one of the opposite surfaces of the swash plate and the engaging portion of each piston for sliding on both of the swash plate and each piston; and wherein the swash plate is formed of a ferrous material and has lubricating films (166) formed on sliding surfaces (140, 142) thereof which slide on the shoes; and wherein each of at least one of the plurality of shoes is a nitrided shoe which is formed of a ferrous material and which has been subjected to a soft nitriding treatment on at least a sliding surface (138) thereof which slides on the swash plate.

## Claims

1. A swash plate type compressor including;
a rotary drive shaft (50) having an axis of rotation;
a swash plate (60) supported by said rotary drive shaft such that said swash plate is inclined or tiltable with respect to a plane perpendicular to said axis of rotation of said rotary drive shaft;
a housing (10, 16, 18) which supports said rotary drive shaft such that said rotary drive shaft is rotatable and axially immovable relative to said housing, which has a plurality of cylinder bores (12) which are located at respective circumferential portions radially spaced from said axis of rotation of said rotary drive shaft and which extend in a direction parallel to said rotary drive shaft;
a plurality of pistons (14) each including a head portion (70) slidably engaging a corresponding one of said cylinder bores, and an engaging portion (72) engaging a radially outer portion of opposite surfaces of said swash plate, each piston being reciprocated by said swash plate rotated with said rotary drive shaft; and
a plurality of shoes (76, 78) each of which is disposed between one of said opposite surfaces of said swash plate and said engaging portion of said each piston for sliding on both of said swash plate and said each piston;
and wherein said swash plate is formed of a ferrous material and has lubricating films (166) formed on sliding surfaces (140, 142) thereof which slide on said plurality of shoes;
and wherein each of at least one of said plurality of shoes is a nitrided shoe which is formed of a ferrous material and which has been subjected to a soft nitriding treatment on at least a sliding surface (138) thereof which slides on said swash plate.

2. A swash plate type compressor according to claim 1, wherein all of said plurality of shoes are the nitrided shoes.

3. A swash plate type compressor according to claim 1, wherein each of said plurality of pistons is a single-headed piston, and said plurality of shoes engaging said engaging portion of said single-headed piston consist of a pair of shoes (76, 78) which are respectively disposed between said opposite surfaces of said swash plate and said engaging portion of said single-headed piston, and wherein at least the shoe (78) which slides on one of said opposite surfaces of said swash plate on the side of said head portion of said single-headed piston is said nitrided shoe.

4. A swash plate type compressor according to any one of claims 1-3, wherein said nitrided shoe is formed of a medium-carbon steel or a high-carbon steel.

5. A swash plate type compressor according to any one of claims 1-3, wherein said nitrided shoe is formed of a high-carbon chrome bearing steel.

6. A swash plate type compressor according to any one of claims 1-3, wherein said nitrided shoe is formed of a stainless steel.

7. A swash plate type compressor according to any one of claims 1-6, wherein said soft nitriding treatment is effected according to a salt bath method.

8. A swash plate type compressor according to any one of claims 1-7, wherein said nitrided shoe has a compound layer (152) formed on a surface thereof by said soft nitriding treatment and having a thickness value in a range of not smaller than 5 µm and not larger than 20 µm.

9. A swash plate type compressor according to any one of claims 1-8, wherein said nitrided shoe is formed by a forging operation, said soft nitriding treatment being effected after said forging operation.

10. A swash plate type compressor according to any one of claims 1-9, wherein said swash plate is formed of a spheroidal graphite cast iron.

11. A swash plate type compressor according to any one of claims 1-10, wherein said lubricating films comprise a solid lubricant and a synthetic resin as a binder.

12. A swash plate type compressor according to claim 11, wherein said solid lubricant includes at least one of molybdenum disulfide (MoS₂), boron nitride (BN), tungsten disulfide (WS₂), grahite, and polytetrafluoroethylene (PTFE).

13. A swash plate type compressor according to claim 11 or 12, wherein said synthetic resin includes at least one of polyamidimide, epoxy resin, polyether ketone, and phenol resin.

14. A swash plate type compressor according to any one of claims 1-13, wherein said swash plate includes, on at least said sliding surfaces thereof which slides on said shoes, metal sprayed films formed of a material selected from the group consisting of aluminum, copper, an aluminum alloy, and a copper alloy, each of said lubricating films being formed on each of said metal sprayed films.

15. A swash plate type compressor according to any one of claims 1-14, wherein said swash plate is subjected to a quenching treatment on at least said sliding surfaces thereof which slide on said shoes.

16. A swash plate type compressor according to any one of claims 1-15, further including a swash plate inclination angle changing device (12, 14, 22, 24, 56, 66, 86, 100, 104) for changing an inclination angle of said swash plate.
